# EUROPÄISCHE PATENTSCHRIFT

(11) **EP 2 802 635 B1**
(45) Veröffentlichungstag und Bekanntmachung des Hinweises auf die Patenterteilung: **16.09.2015**
(21) Anmeldenummer: 13700022.0
(22) Anmeldetag: 02.01.2013
(51) Int. Cl.: C09D 183/04, C08L 83/04

(54) **HITZESTABILISIERTE SILICONMISCHUNG**
HEAT-STABILIZED SILICONE MIXTURE
MÉLANGE DE SILICONE STABILISÉE THERMIQUEMENT

(30) Priorität: 11.01.2012 DE 102012200335
(43) Veröffentlichungstag der Anmeldung: 19.11.2014
(73) Patentinhaber: Wacker Chemie AG, 81737 München (DE)
(72) Erfinder: MÜLLER, Philipp, 84489 Burghausen (DE)
(74) Vertreter: Fritz, Helmut
(86) Internationale Anmeldenummer: PCT/EP2013/050010
(87) Internationale Veröffentlichungsnummer: WO 2013/104551

(56) Entgegenhaltungen:
- WO-A1-2011/107592
- WO-A2-2008/138944
- MX-A- 9 702 803

## Beschreibung

Die Erfindung betrifft eine vernetzbare Siliconmischung, welche eine Ferrocenverbindung und mindestens eine Epoxidgruppe aufweisendes Alkoxysilan enthält.

Elektronische Bauteile werden bei immer größeren Leistungen betrieben und durch die weiter voran schreitende Miniaturisierung nimmt die Leistungsdichte weiter zu. Gerade in der Leistungselektronik werden neue Materialien gefordert, die dauerhaft einer Temperaturbelastung von über 200°C widerstehen und den damit vergossenen Leistungshalbleitern einen dauerhaften Schutz vor Umwelteinflüßen und eine Sicherung der Isolationsfestigkeit gewährleisten. Die bis dato im Bereich der Power Module eingesetzten Silicon Gele erfüllen diese Forderung nicht, da ab ca. 180°C eine thermooxydative Versprödung einsetzt, die das Gel verhärten lassen und zusätzlich wird eine Delamination und Blasenbildung des Gelvergusses vom zu schützenden Substrat beobachtet.

MX 9702803 beschreibt Fluor-Silicon Gele die durch Zusatz von Ferrocen oder Ferrocenderivaten hitzestabilisert werden, so dass die mechanischen Eigenschaften bei Hitzeeinwirkung weitgehend erhalten bleiben.

Mit Ferrocen oder Ferrocenderivaten hitzestabilisierte Fluor-Silicon Gele sind beschrieben. Für den Schutz von elektronischen Bauteilen genügt die reine Hitzestabilität jedoch nicht. D.h. die reine Stabilität des üblicherweise geringen Moduls des vernetzten Silicons reicht nicht um die Elektronik ausreichend zu schützen. Vielmehr muss die bei so hohen Temperaturen auftretende Delamination und Blasenbildung des Vergusses unterbunden werden.

Gegenstand der Erfindung ist eine vernetzbare Siliconmischung, welche enthält
(A) mindestens zwei Alkenylgruppen pro Molekül enthaltendes Polyorganosiloxan mit einer Viskosität bei 25°C von 0,05 bis 50 Pa·s,
(B) mindestens zwei SiH-Funktionen pro Molekül enthaltende Organosiliciumverbindung,
(C) Katalysator der Platingruppe,
(D) Ferrocenverbindung und
(E) mindestens eine Epoxidgruppe aufweisendes Alkoxysilan.

Es wurde festgestellt, dass die in MX 9702803 beschriebenen, mit Ferrocen additivierten, hitzestabilisierten Silicon Gele aufgrund mangelnder Adhäsion zum zu schützenden Substrat zu einer Ablösung der Siliconschicht führt und somit sowohl die Schutzwirkung als auch durch die Siliconschicht erhöhte Isolationsfestigkeit verloren geht.

Durch Zusatz des mindestens eine Epoxidgruppe aufweisenden Alkoxysilans (E) kann die Siliconmischung zusätzlich eine kohäsive Verbindung mit dem zu schützenden Substrat eingehen. Diese Siliconmischung lässt sich zu selbsthaftenden, hitzestabilen Silicon Gelen oder weichen Siliconelastomeren aushärten, bietet einen dauerhaften Schutz und sichert die Isolationsfestigkeit von elektronischen Bauteilen.

Die Zusammensetzung des Alkenylgruppen enthaltenden Polyorganosiloxans (A) entspricht vorzugsweise der durchschnittlichen allgemeinen Formel (1)

R¹ₓR²_{y}SiO_{(4-x-y)/2} (1),

in der
- **R¹**: einen einwertigen, unsubstituierten oder halogen- oder cyanosubstituierten C₂-C₁₀- Kohlenwasserstoffrest, der aliphatische Kohlenstoff-Kohlenstoff Mehrfachbindungen enthält und der über eine organische zweiwertige Gruppe an das Siliciumatom gebunden sein kann,
- **R²**: einen einwertigen, unsubstituierten oder halogen- oder cyanosubstituierten C₁-C₁₀- Kohlenwasserstoffrest, der frei ist von aliphatischen Kohlenstoff-Kohlenstoff Mehrfachbindungen,
- **x**: eine solche nichtnegative Zahl, dass mindestens zwei Reste **R¹** in jedem Molekül vorhanden sind, und
- **y**: eine nicht negative Zahl, so dass (x+y) im Bereich von 1,8 bis 2,5 liegt, bedeuten.

Die Alkenylgruppen R¹ sind einer Anlagerungsreaktion mit einem SiH-funktionellen Vernetzungsmittel, insbesondere mit Organosiliciumverbindung (B) zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen **R¹** an Silicium der Polymerkette gebunden sein können, bestehen beispielsweise aus Oxyalkyleneinheiten, wie solche der allgemeinen Formel (2)

-(O)ₘ[(CH₂)ₙO]ₒ- (2),

in der
- **m**: die Werte 0 oder 1, insbesondere 0,
- **n**: Werte von 1 bis 4, insbesondere 1 oder 2 und
- **o**: Werte von 1 bis 20, insbesondere von 1 bis 5 bedeuten.

Die Oxyalkyleneinheiten der allgemeinen Formel (10) sind links an ein Siliciumatom gebunden.

Die Reste **R¹** können in jeder Position der Polymerkette, insbesondere an den endständigen Siliciumatomen gebunden sein.

Beispiele für unsubstituierte Reste **R²** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie o-, m-, p-Tolylreste und Ethylphenylreste; Aralkylreste, wie der Benzylrest, der alpha- und der ß-Phenylethylrest.

Beispiele für substituierte Kohlenwasserstoffreste als Reste R² sind halogenierte Kohlenwasserstoffe, wie der Chlormethyl-, 3-Chlorpropyl-, 3-Brompropyl, 3,3,3-Trifluorpropyl und 5,5,5,4,4,3,3-Hexafluorpentylrest sowie der Chlorphenyl-, Dichlorphenyl- und Trifluortolylrest.

**R²** weist vorzugsweise 1 bis 6 Kohlenstoffatome auf. Insbesondere bevorzugt sind Methyl und Phenyl.

Bestandteil (A) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane (A) kann linear, cyclisch oder auch verzweigt sein. Der Gehalt an zu verzweigten Polyorganosiloxanen führenden tri- und/oder tetrafunktionellen Einheiten, ist typischerweise sehr gering, vorzugsweise höchstens 20 Mol-%, insbesondere höchstens 0,1 Mol-%.

Besonders bevorzugt ist die Verwendung Vinylgruppen enthaltender Polydimethylsiloxane, deren Moleküle der allgemeinen Formel (3)

(ViMe₂SiO_{1/2})₂(ViMeSiO)ₚ(Me₂SiO)_{q} (3),

entsprechen, wobei die nichtnegativen ganzen Zahlen **p** und **q** folgende Relationen erfüllen: **p**≥0, 50<**(p+q)**<20000, vorzugsweise 200<**(p+q)**<1000, und 0<(**p**+1)/**(p+q)**<0.2.

Die Viskosität des Polyorganosiloxans (A) beträgt bei 25°C vorzugsweise 0,1 bis 15 Pa·s, insbesondere 0,3 bis 5 Pa·s.

Der Gehalt an Polyorganosiloxan (A) wird vorzugsweise so gewählt, dass die Siliconmischung einen Gehalt an Verbindung (A) von 30-99,8 Gew.-%, bevorzugt von 50-99,5 Gew.-%, insbesondere 60-99 Gew.-% besitzt.

Die mindestens zwei SiH-Funktionen pro Molekül enthaltende Organosiliciumverbindung (B), besitzt vorzugsweise eine Zusammensetzung der durchschnittlichen allgemeinen Formel (4)

HₐR³_{b}SiO_{(4-a-b)/2} (4),

in der
- **R³**: einen einwertigen, unsubstituierten oder halogen- oder cyanosubstituierten C₁-C₁₈- Kohlenwasserstoffrest, der frei ist von aliphatischen Kohlenstoff-Kohlenstoff Mehrfachbindungen bedeutet und
- **a** und **b**: nichtnegative ganze Zahlen sind,
mit der Maßgabe, dass 0.5<**(a+b)**<3,0 und 0<**a**<2, und dass mindestens zwei siliciumgebundene Wasserstoffatome pro Molekül vorhanden sind.

Beispiele für **R³** sind die für **R²** angegebenen Reste. **R³** weist vorzugsweise 1 bis 6 Kohlenstoffatome auf. Insbesondere bevorzugt sind Methyl und Phenyl.

Bevorzugt ist die Verwendung einer drei oder mehr SiH-Bindungen pro Molekül enthaltenden Organosiliciumverbindung (B). Bei Verwendung einer nur zwei SiH-Bindungen pro Molekül aufweisenden Organosiliciumverbindung (B) empfiehlt sich die Verwendung eines Polyorganosiloxans (A), das über mindestens drei Alkenylgruppen pro Molekül verfügt.

Der Wasserstoffgehalt der Organosiliciumverbindung (B), welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew.-% Wasserstoff.

Die Organosiliciumverbindung (B) enthält vorzugsweise mindestens drei und höchstens 600 Siliciumatome pro Molekül. Bevorzugt ist die Verwendung von Organosiliciumverbindung (B), die 4 bis 200 Siliciumatome pro Molekül enthält.

Die Struktur der Organosiliciumverbindung (B) kann linear, verzweigt, cyclisch oder netzwerkartig sein.

Besonders bevorzugte Organosiliciumverbindungen (B) sind lineare Polyorganosiloxane der allgemeinen Formel (5)

(HR⁴₂SiO_{1/2})_{c}(R⁴₃SiO_{1/2})_{d}(HR⁴SiO_{2/2})ₑ(R⁴₂SiO_{2/2})_{f} (5),

wobei
**R⁴** die Bedeutungen von **R³** hat und
die nichtnegativen ganzen Zahlen **c, d, e** und **f** folgende Relationen erfüllen: (**c+d**)=2, (**c+e**)>2, 5<(**e+f**)<200 und 1<**e**/(**e +f**)<0,1.

Die SiH-funktionelle Organosiliciumverbindung (B) ist vorzugsweise in einer solchen Menge in der vernetzbaren Siliconmasse enthalten, dass das Molverhältnis von SiH-Gruppen zu Alkenylgruppen bei 0,1 bis 3, insbesondere bei 0,2 bis 1,5 liegt.

Als Katalysator (C) können alle bekannten Katalysatoren der Platingruppe eingesetzt werden, welche die bei der Vernetzung von additionsvernetzenden Siliconmassen ablaufenden Hydrosilylierungsreaktionen katalysieren. Der Katalysator (C) enthält ein mindestens ein Metall oder eine Verbindung von Platin, Rhodium, Palladium, Ruthenium und Iridium, vorzugsweise Platin.

Beispiele für solche Katalysatoren (C) sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z. B. PtCl₄, H₂PtCl₆.6H₂O, Na₂PtCl₄·4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆·6H₂O und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe.

Insbesondere bevorzugt als Katalysator (C) ist der KARSTEDT-Katalysator, d. h. ein Pt(0)-Komplex, insbesondere der Platin(0)-1,3-Divinyl-1,1,3,3-tetramethyldisiloxan-Komplex der Formel Pt₂[[(CH₂=CH)(CH₃)₂Si]₂O]₃.

In einer bevorzugten Ausführungsform sind die Katalysatoren (C) durch Licht von 200 bis 500 nm aktivierbar.

Besonders geeignete durch Licht aktivierbare Katalysatoren (C) sind Cyclopentadienyl-Komplexe des Platin, vorzugsweise der allgemeinen Formel (6) 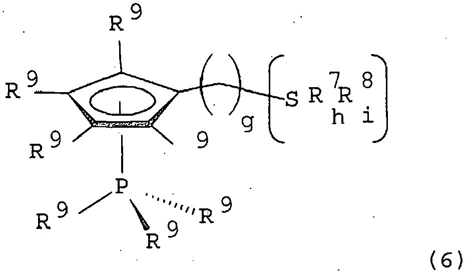 wobei
**g** = 1 bis 8,
**h** = 0 bis 2,
**i** = 1 bis 3,
**R⁷** unabhängig voneinander, gleich oder verschieden einen monovalenten, unsubstituierten oder substituierten, linearen, cyclischen oder verzweigten, aliphatisch gesättigte oder ungesättigte oder aromatisch ungesättigte Reste enthaltenden Kohlenwasserstoffrest mit 1 bis 30 Kohlenstoffatomen, in dem einzelne Kohlenstoffatome durch O-, N-, S- oder P-Atome ersetzt sein können,
**R⁸** unabhängig voneinander, gleiche oder verschiedene hydrolysierbare funktionelle Gruppen, ausgewählt aus der Gruppe enthaltend
   Carboxy -O-C(O)R¹⁰,
   Oxim -O-N=CR¹⁰₂,
   Alkoxy -OR¹⁰,
   Alkenyloxy -O-R¹²
   Amid -NR¹⁰-C(O)R¹¹,
   Amin -NR¹⁰R¹¹,
   Aminoxy -O-NR¹⁰R¹¹, mit
   **R¹⁰** unabhängig voneinander, gleich oder verschieden H, Alkyl, Aryl, Arylalkyl, Alkylaryl,
   **R¹¹** unabhängig voneinander, gleich oder verschieden Alkyl, Aryl, Arylalkyl, Alkylaryl,
   **R¹²** einen linearen oder verzweigten, aliphatisch ungesättigten organischen Rest,
   **R^{9a}** unabhängig voneinander, gleich oder verschieden Alkyl, Aryl, Arylalkyl, Alkylaryl mit 1 bis 30 Kohlenstoffatomen, wobei die Wasserstoffe durch -Hal oder -SiR₃⁹ substituiert sein können, mit
   **R⁹** unabhängig voneinander, gleich oder verschieden einen monovalenten, unsubstituierten oder substituierten, linearen, cyclischen oder verzweigten Kohlenwasserstoffrest,
   **R^{9b}** unabhängig voneinander, gleich oder verschieden Wasserstoff öder einen monovalenten, unsubstituierten oder substituierten, linearen oder verzweigten, aliphatisch gesättigte oder ungesättigte oder aromatisch ungesättigte Reste enthaltenden Kohlenwasserstoffrest mit 1 bis 30 Kohlenstoffatomen, in dem einzelne Kohlenstoffatome durch O-, N-, S- oder P-Atome ersetzt sein können und die mit dem Cyclopentadienylrest annelierte Ringe bilden können, bedeuten.

Bevorzugte Reste **R⁷** sind lineare gesättigte Kohlenwasserstoffreste mit 1 bis 8 Kohlenstoffatomen. Weiterhin bevorzugt ist der Phenylrest.

Bevorzugte Reste **R⁸** sind Methoxy-, Ethoxy-, Acetoxy- und 2-Methoxyethoxy-Gruppen.

Bevorzugte Reste **R^{9a}** sind lineare und verzweigte, gegebenenfalls substituierte Alkylreste wie Methyl-, Ethyl-, Propyl- oder Butylreste.

Bevorzugte Reste **R^{9b}** sind lineare und verzweigte, gegebenenfalls substituierte lineare Alkylreste wie Methyl-, Ethyl-, Propyl- oder Butylreste. Weiterhin bevorzugt sind gegebenenfalls weiter substituierte annelierte Ringe wie zum Beispiel der Indenyl- oder der Fluorenylrest.

Besonders bevorzugt als Katalysator (C) ist MeCp(PtMe₃).

Katalysator (C) kann in jeder beliebigen Form eingesetzt werden, beispielsweise auch in Form von Hydrosilylierungskatalysator enthaltenden Mikrokapseln, oder Organopolysiloxanpartikeln.

Der Gehalt an Hydrosilylierungskatalysatoren (C) wird vorzugsweise so gewählt, dass die Siliconmischung einen Gehalt an Metall der Platingruppe von 0,1-200 Gew.-ppm, bevorzugt von 0,5-40 Gew.-ppm besitzt.

Die Siliconmischung ist bevorzugt transparent und frei von Licht absorbierenden Füllstoffen.

Bevorzugt als Ferrocenverbindung (D) sind Ferrocen ((Di(cyclopentadienyl)eisen), Acetylferrocen, Vinylferrocen, Ethinylferrocen, Ferrocenylmethanol, Tetrachlorferrat (III) bis (η-cyclopentadienyl)eisen (III), Tetracarbonylbis(η- cyclopentadienyl)di-eisen(I), 1,1'-Bis(trimethylsilyl)-ferrocen, 1,1'-(Dimethylphenoxysilyl)ferrocen und 1,1'-bis (Dimethylethoxysilyl)ferrocen. Besonders bevorzugt sind Ferrocen und Acetylferrocen. Die Ferrocenverbindung (D) kann auch ein Gemisch aus verschiedenen Ferrocenverbindungen (D) sein.

Der Gehalt an Ferrocenverbindung (D) wird vorzugsweise so gewählt, dass die Siliconmischung einen Gehalt an Ferrocenverbindung (D) von 1-5000 Gew.-ppm, bevorzugt von 10-1000 Gew.-ppm besitzt.

Das mindestens eine Epoxidgruppe aufweisende Alkoxysilan (E) weist vorzugsweise die allgemeine Formel 7

R¹³ᵤR¹⁴ᵥSi(OR¹⁵)₄₋ᵤ₋ᵥ (7),

auf, in der
- **R¹³**: einen nichtsubstituierten oder halogensubstuierten einwertigen Kohlenwasserstoffrest mit 1 bis 10 Kohlenstoffatomen,
- **R¹⁴**: einen mindestens eine Epoxigruppe enthaltenden einwertigen Kohlenwasserstoffrest mit 2 bis 20 Kohlenstoffatomen, der halogensubstituiert und durch O-, N-, S-, oder P-Atome unterbrochen sein kann,
- **R¹⁵**: einen Alkylrest mit 1-6 Kohlenstoffatomen,
- **u**: 0, 1 oder 2 und
- **v**: 1, 2 oder 3 bedeuten,
mit der Maßgabe, dass die Summe aus **u** und **v** kleiner oder gleich 3 ist.

Beispiele und bevorzugte Beispiele für den Rest **R¹³** und **R¹⁵** sind vorstehend bei Rest **R²** aufgeführt.

Besonders bevorzugte Reste **R¹³** sind Methyl-, Ethyl, Vinyl- und Phenylrest.

Besonders bevorzugte Reste **R¹⁵** sind Methyl-, Ethyl, Propyl- und Butylreste.

Beispiele für die Reste **R¹⁴** sind Epoxyethyl-, 2,3-Epoxypropyl-, 3,4-Epoxybutyl-, 5,6-Epoxyhexyl-, 9,10-Epoxydecyl-, Glycidyloxy-, 3-Glycidyloxypropyl-, Glycidyloxyisobutyl-, 2-Methylglycidyloxypropyl-, 3-Phenylglycidyloxypropyl-, Glycidyloxyphenylnonyl-, Glycidyloxybenzylethyl-, 3,4-Epoxycyclohexyl-, 2-(3,4-Epoxycyclohexyl)ethyl-, 3-(3,4-Epoxycyclohexyl)propyl-, 1,4-Epoxycyclohexyl- oder 2-(1,4-Epoxycyclohexyl)ethylrest. Bevorzugte Reste **R¹⁴ sind** 3,4-Epoxycyclohexyl-,3-(3,4-Epoxycyclohexyl)propyl- und Glycidoxypropylrest. Vorzugsweise weist Rest **R¹⁴** 2 bis 10 Kohlenstoffatome auf. Vorzugsweise ist Rest **R¹⁴** ein Alkylrest. Der besonders bevorzugte Rest **R¹⁴** ist der Glycidoxypropylrest.

Als Epoxidgruppe aufweisendes Alkoxysilan (E) besonders bevorzugt ist Glycidyloxypropyltrimethoxysilan (Glymo).

Der Gehalt an Epoxidgruppe aufweisendem Alkoxysilan (E) wird vorzugsweise so gewählt, dass die Siliconmischung einen Gehalt an Verbindung (E) von 0,01-5 Gew.-%, bevorzugt von 0,1-2 Gew.-%, insbesondere 0,2-1 Gew.-% besitzt.

Die Siliconmischung kann auch Füllstoff (F) enthalten. Beispiele für sind nicht verstärkende Füllstoffe (F) sind Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver. Verstärkende Füllstoffe, also Füllstoffe mit einer BET-Oberfläche von mindestens 50 m²/g, sind beispielsweise pyrogen hergestellte Kieselsäure, gefällte Kieselsäure, Ruß, wie Furnace- und Acetylenruß und Silicium-Aluminium-Mischoxide großer BET-Oberfläche. Faserförmige Füllstoffe sind beispielsweise Asbest sowie Kunststoffasern. Die genannten Füllstoffe können hydrophobiert sein, beispielsweise durch die Behandlung mit Organosilanen bzw. -siloxanen oder durch Verätherung von Hydroxylgruppen zu Alkoxygruppen. Es kann eine Art von Füllstoff, es kann auch ein Gemisch von mindestens zwei Füllstoffen eingesetzt werden.

Wenn die Siliconmischungen Füllstoff (F) enthalten, beträgt dessen Anteil vorzugsweise 2 bis 60 Gew.-%, insbesondere 5 bis 50 Gew.-%.

Die Siliconmischungen können als Bestandteil (G) ein H-terminiertes lineares Polyorganosiloxan enthalten. Vorzugsweise ist das Polyorganosiloxan (G) ein H-dimethylsiloxyterminiertes Dimethylpolysiloxan der Formel HSi(CH₃)₂-[O-Si(CH₃)₂]_{w}-H, wobei w Werte von 1 bis 1000 bedeutet.

Vorzugsweise beträgt die Viskosität des Polyorganosiloxans (G) bei 25°C von 0,1 bis 10 Pa·s, insbesondere 0,5 bis 3 Pa·s. Wenn die Siliconmischungen H-terminiertes lineares Polyorganosiloxan (G) enthalten, beträgt dessen Anteil vorzugsweise 2 bis 70 Gew.-%, insbesondere 5 bis 50 Gew.-%.

Die Siliconmischungen können als Bestandteil (H) weitere Zusätze zu einem Anteil von bis zu 70 Gew.-%, vorzugsweise 0,0001 bis 40 Gew.-%, enthalten. Diese Zusätze können z.B. harzartige Polyorganosiloxane, die von den Organopolysiloxanen (A) und (B) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Farbstoffe, Pigmente usw. Des Weiteren können als Bestandteil (H) thixotropierende Bestandteile, wie hochdisperse Kieselsäure oder andere handelsübliche Thixotropieadditive enthalten sein.

Enthalten sein können des Weiteren Zusätze (H), die der gezielten Einstellung der Verarbeitungszeit, Anspringtemperatur und Vernetzungsgeschwindigkeit der Siliconmischung dienen. Diese Inhibitoren und Stabilisatoren sind auf dem Gebiet der vernetzenden Massen sehr gut bekannt.

Zusätzlich können auch Additive hinzugefügt werden, die den Druckverformungsrest verbessern. Zusätzlich können auch Hohlkörper hinzugefügt werden. Zusätzlich können auch Treibmittel zur Erzeugung von Schäumen hinzugefügt werden. Zusätzlich können auch nicht vinylfunktionalisierte Polydiorganosiloxane hinzugefügt werden.

Die Compoundierung der Siliconmischung erfolgt durch Mischen der oben aufgeführten Bestandteile (A) bis (H) in beliebiger Reihenfolge. Die Bestandteile (A) bis (H) der Siliconmischung können zu 2 Komponenten oder aus nur 1 Komponente compoundiert werden.

Die Siliconmischung kann bereits bei 20°C nach Zusammenmischen der einzelnen Bestandteile vernetzen oder wird mit Licht von 200 bis 500 nm bestrahlt oder wird vorzugsweise erwärmt, um sie zu Formkörpern auszuhärten. Die Temperatur beträgt dabei vorzugsweise mindestens 60°C besonders bevorzugt mindestens 90°C, insbesondere mindestens 120°C und bevorzugt bei höchstens 250°C, besonders bevorzugt höchstens 200°C, insbesondere höchstens 160°C.

Die Siliconmischung weist vorzugsweise eine Viskosität bei 25°C von 0,1 bis 15 Pa·s, insbesondere 0,3 bis 5 Pa·s auf.

Die Siliconmischungen sind aufgrund der Hitzestabilität und der zugleich mit Haftadditiven (E) erzeugter Selbsthaftung besonders geeignet für den Verguss von bei hohen Temperaturen betriebenen Leistungselektroniken wie Power Modulen oder Hybridelektroniken.

Gegenstand der Erfindung sind auch Siliconformkörper, die erhältlich sind durch ein Verfahren, bei dem eine Siliconmischung, enthaltend
(A) mindestens zwei Alkenylgruppen pro Molekül enthaltendes Polyorganosiloxan mit einer Viskosität bei 25°C von 0,05 bis 50 Pa·s,
(B) mindestens zwei SiH-Funktionen pro Molekül enthaltende Organosiliciumverbindung,
(C) Katalysator der Platingruppe,
(D) Ferrocenverbindung und
(E) mindestens eine Epoxidgruppe aufweisendes Alkoxysilan, auf mindestens 80°C erwärmt wird.

Gegenstand der Erfindung sind auch Siliconformkörper, die erhältlich sind durch ein Verfahren, bei dem eine Siliconmischung, enthaltend
(A) mindestens zwei Alkenylgruppen pro Molekül enthaltendes Polyorganosiloxan mit einer Viskosität bei 25°C von 0,05 bis 50 Pa·s,
(B) mindestens zwei SiH-Funktionen pro Molekül enthaltende Organosiliciumverbindung,
(C) durch Licht von 200 bis 500 nm aktivierbaren Katalysator der Platingruppe,
(D) Ferrocenverbindung und
(E) mindestens eine Epoxidgruppe aufweisendes Alkoxysilan,
mit Licht von 200 bis 500 nm bestrahlt wird.

In einer bevorzugten Ausführungsform beträgt der Elastizitätsmodul der ausgehärteten Siliconmischung 5 bis 100 kPa, insbesondere 8 bis 60 kPa. In diesem Bereich erzeugt die ausgehärtete Siliconmischung einen ausreichenden Gegendruck gegen die Expansion einer Blase.

Alle vorstehenden Symbole der vorstehenden Formeln weisen ihre Bedeutungen jeweils unabhängig voneinander auf. In allen Formeln ist das Siliciumatom vierwertig. Die Summe aller Bestandteile der Siliconmischung ergeben 100 Gew.-%.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele

Beschreibung der eingesetzten Rohstoffe:
Vinylpolymere (A): Es handelt sich um
vinyldimethylsiloxyterminerte Dimethylpolysiloxane, die nach herkömmlichen Verfahren hergestellt wurden.
Vinylpolymer 1: 500 mPas, DP = 145
Vinylpolymer 2: 1020 mPas, DP = 183

### H-terminiertes Polysiloxan (G):

Es handelt sich um ein H-dimethylsiloxyterminiertes Dimethylpolysiloxan mit einer Viskosität von 1000 mPas und der Kettenlänge DP = 180 das nach herkömmlichen Verfahren hergestellt wurde.

### SiH-Vernetzer (B):

Der SiH-Vernetzer ist ein trimethylsilylterminiertes Dimethyl/- Methylhydrogen-Copolysiloxan und hat eine Viskosität von 100 mm²/s bei 25°C und einen H-Gehalt von 0,47 %-Gew.

### Katalysatorbatch (C):

KARSTEDT-Katalysator (Platin(0)-1,3-Divinyl-1,1,3,3-tetramethyldisiloxan-Komplex) mit 1 %-Gew Platin in Vinylpolymer (A) 1.

Ferrocen (D): Ferrocen 99% der Fa. Aldrich.

Alkoxysilan (E): Glycidoxypropyltrimethoxysilan, Dynasilan Glymo der Fa. Evonik.

### Beschreibung der Siliconmischungen und Tests:

Die Siliconmischungen wurden in geeigneten Mischern gemischt. Nach dem Mischen wurden die Siliconmischungen bei 10 mbar für 10 min entgast.

Delaminationstest, Blasenbildlungstest: Die entgasten Siliconmischungen wurden auf eine mit Kupfer teilmetallisierte Hybridkeramikmit einer Schichthöhe von 3 mm aufgetragen und bei 150°C im Umluftofen für 60 min ausgehärtet. Anschließend erfolgte Lagerung der vergossenen Keramik auf einer 210°C heißen Heizplatte. Die Auslese auf Blasenbildung erfolgte nach 1, 24 und 168 Stunden.

Positiv (pos) bedeutet keine Blasenbildung beobachtet.

Negativ (neg) bedeutet Blasenbildung beobachtet.

Hitzestabilitätstest: Die entgasten Siliconmischungen wurden in Aluminiumschälchen mit einer Schichtdicke von 6 mm bei 150°C für 60 min im Umluftofen ausgehärtet und anschließend bei 210°C im Umluftofen hitzegelagert und zu den Messzeiten nach 1, 168 und 1000 Stunden entnommen. Vor den Modulmessungen wurden die Proben 4 h bei 20°C gelagert. Zur Bestimmung des Moduls wurde ein Rundzyiinder mit 4mm Durchmesser 3 mm tief in das Vulkanisat eingefahren und die hierzu notwendige Kraft bestimmt. Der Modul errechnet sich aus der Eindringkraft pro Zylinderfläche von 1256 mm².

In den Beispielen 1-6 wurden Siliconmischungen hergestellt, gehärtet und den Tests unterzogen. Die Zusammensetzungen und Ergebnisse sind in Tabelle 1 aufgeführt:
Beispiele 1-3 erfindungsgemäß: Siliconmischungen mit Hitzestabilisator Ferrocen und Haftungsadditiv Glymo.
Beispiel 4, nicht erfindungsgemäß, ohne Hitzestabilisator Ferrocen, ohne Haftungsadditiv Glymo,
Beispiel 5, nicht erfindungsgemäß, analog MX 9702803, mit Hitzestabilisator Ferrocen, ohne Haftungsadditiv Glymo Beispiel 6, nicht erfindungsgemäß, ohne Hitzestabilisator Ferrocen, aber mit Haftungsaditiv Glymo.

Die erfindungsgemäßen Beispiele zeigen dass nur die Siliconmischungen der Beispiele 1-3 mit der Kombination aus Hitzestabilisator Ferrocen und Haftungsvermittler Glymo das Unterbleiben der thermooxydativen Versprödung sichert und die Blasenbildung und Ablösung vom Substrat unterbindet. Die Siliconmischungen der Beispiele 1-3 bringen einen dauerhaften und nachhaltigen Schutz der zu schützenden Substrate. Tabelle 1:

| | **Beispiel** | **1** | **2** | **3** | **4*** | **5*** | **6*** |
|---|---|---|---|---|---|---|---|
| **Zusammensetzung** | Vinylpolymer 1: | 100 | - | - | 100 | 100 | 100 |
| | Vinylpolymer 2: | - | 100 | 100 | - | - | - |
| | H-Polymer: | - | 50 | 50 | | | |
| | | | | | | | |
| | SiH Vernetzer | 0,8 | 0,2 | 0,8 | 0,8 | 0,8 | 0,8 |
| | Katalysatorbatch | 0,1 | 0,1 | 0,1 | 0,1 | 0,1 | 0,1 |
| | Ferrocen | 0,01 | 0,01 | 0,01 | - | 0,01 | - |
| | Glymo | 0,5 | 0,5 | 0,5 | - | - | 0,5 |
| **Delamination/ Blasenbildung positiv / negativ** | nach 1 h / 210°C | pos | pos | pos | neg | neg | pos |
| | nach 24 h / 210°C | pos | pos | pos | neg | neg | pos |
| | nach 168 h / 210°C | pos | pos | pos | neg | neg | pos |
| **Modul in kPa** | nach 1 h / 210°C | 11 | 10 | 48 | 11 | 11 | 10 |
| | nach 168 h / 210°C | 11 | 10 | 48 | > 2000 | 11 | > 2000 |
| | nach 1000 h /210°C | 12 | 11 | 48 | > 2000 | 12 | > 2000 |

| | | | | | | | |
|---|---|---|---|---|---|---|---|
| *nicht erfindungsgemäss | | | | | | | |

## Patentansprüche

1. Vernetzbare Siliconmischung, welche enthält
(A) mindestens zwei Alkenylgruppen pro Molekül enthaltendes Polyorganosiloxan mit einer Viskosität bei 25°C von 0,05 bis 50 Pa·s,
(B) mindestens zwei SiH-Funktionen pro Molekül enthaltende Organosiliciumverbindung,
(C) Katalysator der Platingruppe,
(D) Ferrocenverbindung und
(E) mindestens eine Epoxidgruppe aufweisendes Alkoxysilan.

2. Vernetzbare Siliconmischung nach Anspruch 1, bei der das Alkenylgruppen enthaltende Polyorganosiloxans (A) der durchschnittlichen allgemeinen Formel (1)
R¹ₓR²_{y}SiO_{(4-x-y)/2} (1),
entspricht, in der
**R¹** einen einwertigen, unsubstituierten oder halogen- oder cyanosubstituierten C₂-C₁₀- Kohlenwasserstoffrest, der aliphatische Kohlenstoff-Kohlenstoff Mehrfachbindungen enthält und der über eine organische zweiwertige Gruppe an das Siliciumatom gebunden sein kann,
**R²** einen einwertigen, unsubstituierten oder halogen- oder cyanosubstituierten C₁-C₁₀- Kohlenwasserstoffrest, der frei ist von aliphatischen Kohlenstoff-Kohlenstoff Mehrfachbindungen,
**x** eine solche nichtnegative Zahl, dass mindestens zwei Reste **R¹** in jedem Molekül vorhanden sind, und
**y** eine nicht negative Zahl, so dass (x+y) im Bereich von 1,8 bis 2,5 liegt, bedeuten.

3. Vernetzbare Siliconmischung nach Anspruch 1 oder 2, bei der die mindestens zwei SiH-Funktionen pro Molekül enthaltende Organosiliciumverbindung (B) eine Zusammensetzung der durchschnittlichen allgemeinen Formel (4)
HₐR³_{b}SiO_{(4-a-b)/2} (4),
besitzt, in der
**R³** einen einwertigen, unsubstituierten oder halogen- oder cyanosubstituierten C₁-C₁₈- Kohlenwasserstoffrest, der frei ist von aliphatischen Kohlenstoff-Kohlenstoff Mehrfachbindungen bedeutet und
**a** und **b** nichtnegative ganze Zahlen sind, mit der Maßgabe, dass 0.5<**(a+b)**<3,0 und 0<**a**<2, und dass mindestens zwei siliciumgebundene Wasserstoffatome pro Molekül vorhanden sind.

4. Vernetzbare Siliconmischung nach Anspruch 1 bis 3, bei der die als Ferrocenverbindung (D) ausgewählt wird aus Ferrocen, Acetylferrocen, Vinylferrocen, Ethinylferrocen, Ferrocenylmethanol, Tetrachlorferrat (III) bis (η-cyclopentadienyl)eisen (III), Tetracarbonylbis(η- cyclopentadienyl)di-eisen(I), 1,1'-Bis(trimethylsilyl)-ferrocen, 1,1'-(Dimethylphenoxysilyl)ferrocen und 1,1'-bis (Dimethylethoxysilyl)ferrocen.

5. Vernetzbare Siliconmischung nach Anspruch 1 bis 4, bei der der Gehalt an Ferrocenverbindung (D) so gewählt wird, dass die Siliconmischung einen Gehalt an Ferrocenverbindung (D) von 1-5000 Gew.-ppm besitzt.

6. Vernetzbare Siliconmischung nach Anspruch 1 bis 5, bei der das mindestens eine Epoxidgruppe aufweisende Alkoxysilan (E) die allgemeine Formel 7
R¹³ᵤR¹⁴ᵥSi(OR¹⁵)₄₋ᵤ₋ᵥ (7),
aufweist, in der
**R¹³** einen nichtsubstituierten oder halogensubstuierten einwertigen Kohlenwasserstoffrest mit 1 bis 10 Kohlenstoffatomen,
**R¹⁴** einen mindestens eine Epoxigruppe enthaltenden einwertigen Kohlenwasserstoffrest mit 2 bis 20 Kohlenstoffatomen, der halogensubstituiert und durch O-, N-, S-, oder P-Atöme unterbrochen sein kann,
**R¹⁵** einen Alkylrest mit 1-6 Kohlenstoffatomen,
**u** 0, 1 oder 2 und
**v** 1, 2 oder 3 bedeuten, mit der Maßgabe, dass die Summe aus **u** und **v** kleiner oder gleich 3 ist.

7. Vernetzbare Siliconmischung nach Anspruch 1 bis 6, bei der der Gehalt an Epoxidgruppe aufweisendem Alkoxysilan (E) so gewählt wird, dass die Siliconmischung einen Gehalt an Verbindung (E) von 0,01-5 Gew.-% besitzt.

8. Siliconformkörper, die erhältlich sind durch ein Verfahren, bei dem eine Siliconmischung, enthaltend
(A) mindestens zwei Alkenylgruppen pro Molekül enthaltendes Polyorganosiloxan mit einer Viskosität bei 25°C von 0,05 bis 50 Pa·s,
(B) mindestens zwei SiH-Funktionen pro Molekül enthaltende Organosiliciumverbindung,
(C) Katalysator der Platingruppe,
(D) Ferrocenverbindung und
(E) mindestens eine Epoxidgruppe aufweisendes Alkoxysilan, auf mindestens 80°C erwärmt wird.

9. Siliconformkörper, die erhältlich sind durch ein Verfahren, bei dem eine Siliconmischung, enthaltend
(A) mindestens zwei Alkenylgruppen pro Molekül enthaltendes Polyorganosiloxan mit einer Viskosität bei 25°C von 0,05 bis 50 Pa·s,
(B) mindestens zwei SiH-Funktionen pro Molekül enthaltende Organosiliciumverbindung,
(C) durch Licht von 200 bis 500 nm aktivierbaren Katalysator der Platingruppe,
(D) Ferrocenverbindung und
(E) mindestens eine Epoxidgruppe aufweisendes Alkoxysilan, mit Licht von 200 bis 500 nm bestrahlt wird.

## Claims

1. Crosslinkable silicone mixture which contains
(A) polyorganosiloxane containing at least two alkenyl groups per molecule and having a viscosity at 25°C of from 0.05 to 50 Pa·s,
(B) an organosilicon compound containing at least two SiH functions per molecule,
(C) a catalyst of the platinum group,
(D) a ferrocene compound and
(E) an alkoxysilane having at least one epoxide group.

2. Crosslinkable silicone mixture according to Claim 1, wherein the polyorganosiloxane (A) containing alkenyl groups corresponds to the average general formula (1)
R¹ₓR²_{y}SiO_{(4-x-y)/2} (1),
where
**R¹** is a monovalent, unsubstituted or halogen- or cyano-substituted C₂-C₁₀-hydrocarbon radical which contains aliphatic carbon-carbon multiple bonds and can be bound via an organic divalent group to the silicon atom,
**R²** is a monovalent, unsubstituted or halogen- or cyano-substituted C₁-C₁₀-hydrocarbon radical which is free of aliphatic carbon-carbon multiple bonds,
**x** is a nonnegative number such that at least two radicals **R¹** are present in each molecule and
**y** is a nonnegative number such that **(x+y)** is in the range from 1.8 to 2.5.

3. Crosslinkable silicone mixture according to Claim 1 or 2, wherein the organosilicon compound (B) containing at least two SiH functions per molecule has a composition of the average general formula (4)
HₐR³_{b}SiO_{(4-a-b)/2} (4),
where
**R³** is a monovalent, unsubstituted or halogen- or cyano-substituted C₁-C₁₈-hydrocarbon radical which is free of aliphatic carbon-carbon multiple bonds and
**a** and **b** are nonnegative integers, with the proviso that 0.5<(a+b)<3.0 and 0<a<2 and that at least two silicon-bonded hydrogen atoms are present per molecule.

4. Crosslinkable silicone mixture according to any of Claims 1 to 3, wherein the ferrocene compound (D) is selected from among ferrocene, acetylferrocene, vinylferrocene, ethynylferrocene, ferrocenylmethanol, tetrachloroferrate(III), bis(η-cyclopentadienyl)iron(III), tetracarbonylbis(η-cyclopentadienyl)diiron(I), 1,1'-bis(trimethylsilyl)-ferrocene, 1,1'-(dimethylphenoxysilyl)ferrocene and 1,1'-bis(dimethylethoxysilyl)ferrocene.

5. Crosslinkable silicone mixture according to any of Claims 1 to 4, wherein the content of ferrocene compound (D) is selected so that the silicone mixture has a content of ferrocene compound (D) of 1-5000 ppm by weight.

6. Crosslinkable silicone mixture according to any of Claims 1 to 5, wherein the alkoxysilane (E) having at least one epoxide group has the general formula 7
R¹³ᵤR¹⁴ᵥSi(OR¹⁵)₄₋ᵤ₋ᵥ (7),
where
**R¹³** is an unsubstituted or halogen-substituted monovalent hydrocarbon radical having from 1 to 10 carbon atoms,
**R¹⁴** is a monovalent hydrocarbon radical which contains at least one epoxy group and has from 2 to 20 carbon atoms and which may be halogen-substituted and interrupted by O, N, S or P atoms,
**R¹⁵** is an alkyl radical having 1-6 carbon atoms,
**u** is 0, 1 or 2 and
**v** is 1, 2 or 3, with the proviso that the sum of u and v is less than or equal to 3.

7. Crosslinkable silicone mixture according to any of Claims 1 to 6, wherein the content of alkoxysilane (E) having an epoxide group is selected so that the silicone mixture has a content of compound (E) of 0.01-5% by weight.

8. Silicone moulding which is obtainable by a process in which a silicone mixture containing
(A) polyorganosiloxane containing at least two alkenyl groups per molecule and having a viscosity at 25°C of from 0.05 to 50 Pa·s,
(B) an organosilicon compound containing at least two SiH functions per molecule,
(C) a catalyst of the platinum group,
(D) a ferrocene compound and
(E) an alkoxysilane having at least one epoxide group is heated to at least 80°C.

9. Silicone moulding which is obtainable by a process in which a silicone mixture containing
(A) polyorganosiloxane containing at least two alkenyl groups per molecule and having a viscosity at 25°C of from 0.05 to 50 Pa·s,
(B) an organosilicon compound containing at least two SiH functions per molecule,
(C) a catalyst of the platinum group, which catalyst can be activated by means of light having a wavelength of from 200 to 500 nm,
(D) a ferrocene compound and
(E) an alkoxysilane having at least one epoxide group is irradiated with light having a wavelength of from 200 to 500 nm.

## Revendications

1. Composition de silicone réticulable, qui contient
(A) un polyorganosiloxane contenant au moins deux groupes alcényle par molécule, ayant une viscosité à 25 °C de 0,05 à 50 Pa.s,
(B) un composé organosilicié comportant au moins deux fonctions SiH par molécule,
(C) un catalyseur du groupe du platine,
(D) un composé ferrocène et
(E) un alcoxysilane comportant au moins un groupe époxy.

2. Composition de silicone réticulable selon la revendication 1, dans laquelle le polyorganosiloxane (A) contenant des groupes alcényle correspond à la formule générale moyenne (1)
R¹ₓR²_{y}SiO_{(4-x-y)/2} (1),
dans laquelle
**R¹** représente un radical hydrocarboné monovalent en C₂-C₁₀, non substitué ou substitué par halogéno ou cyano, qui comporte des liaisons multiples carbone-carbone aliphatiques et qui peut être lié à l'atome de silicium par un groupe organique divalent,
**R²** représente un radical hydrocarboné monovalent en C₁-C₁₀, non substitué ou substitué par halogéno ou cyano, qui est exempt de liaisons multiples carbone-carbone aliphatiques,
**x** représente un nombre non négatif tel qu'au moins deux radicaux **R¹** sont présents dans chaque molécule, et
**y** représente un nombre non négatif tel que la somme **(x+y)** se situe dans la plage de 1,8 à 2,5.

3. Composition de silicone réticulable selon la revendication 1 ou 2, dans laquelle le composé organosilicié (B) comportant au moins deux fonctions SiH par molécule présente une composition de formule générale moyenne (4)
HₐR³_{b}SiO_{(4-a-b)/2} (4),
dans laquelle
**R³** représente un radical hydrocarboné monovalent en C₁-C₁₈, non substitué ou substitué par halogéno ou cyano, qui est exempt de liaisons multiples carbone-carbone aliphatiques et
**a** et **b** sont des nombres entiers non négatifs, étant entendu que 0,5<**(a+b)**<3,0 et 0<**a**<2, et qu'au moins deux atomes d'hydrogène liés au silicium sont présents par molécule.

4. Composition de silicone réticulable selon l'une quelconque des revendications 1 à 3, dans laquelle le composé ferrocène (D) est choisi parmi le ferrocène, l'acétylferrocène, le vinylferrocène, l'éthynylferrocène, le ferrocénylméthanol, le tétrachloroferrate-(III)bis(η-cyclopentadiényl)fer-(III), le tétracarbonylbis(η-cyclopentadiényl)di-fer-(I), le 1,1'-bis(triméthylsilyl)-ferrocène, le 1,1'-(diméthylphénoxysilyl)ferrocène et le 1,1'-bis(diméthyléthoxysilyl)ferrocène.

5. Composition de silicone réticulable selon l'une quelconque des revendications 1 à 4, dans laquelle la teneur en composé ferrocène (D) est choisie de manière que la composition de silicone présente une teneur en composé ferrocène (D) de 1 - 5 000 ppm en poids.

6. Composition de silicone réticulable selon l'une quelconque des revendications 1 à 5, dans laquelle l'alcoxysilane (E) comportant au moins un groupe époxy présente la formule générale 7
R¹³ᵤR¹⁴ᵥSi(OR¹⁵)₄₋ᵤ₋ᵥ (7),
dans laquelle
**R¹³** représente un radical hydrocarboné monovalent ayant de 1 à 10 atomes de carbone, non substitué ou substitué par halogéno,
**R¹⁴** représente un radical hydrocarboné monovalent ayant de 2 à 20 atomes de carbone, contenant au moins un groupe époxy, qui peut être substitué par halogéno et interrompu par des atomes d'oxygène, d'azote, de soufre ou de phosphore,
**R¹⁵** représente un radical alkyle ayant de 1 à 6 atomes de carbone,
**u** représente 0, 1 ou 2 et
**v** représente 1, 2 ou 3, étant entendu que la somme de u et v est inférieure ou égale à 3.

7. Composition de silicone réticulable selon l'une quelconque des revendications 1 à 6, dans laquelle la teneur en alcoxysilane (E) comportant un groupe époxy est choisie de manière que la composition de silicone présente une teneur en composé (E) de 0,01-5 % en poids.

8. Corps moulé silicone qui peut être obtenu par un procédé dans lequel on chauffe à au moins 80 °C une composition de silicone contenant
(A) un polyorganosiloxane contenant au moins deux groupes alcényle par molécule, ayant une viscosité à 25 °C de 0,05 à 50 Pa.s,
(B) un composé organosilicié comportant au moins deux fonctions SiH par molécule,
(C) un catalyseur du groupe du platine,
(D) un composé ferrocène et
(E) un alcoxysilane comportant au moins un groupe époxy.

9. Corps moulé silicone qui peut être obtenu par un procédé dans lequel on irradie avec de la lumière de 200 à 500 nm une composition de silicone contenant
(A) un polyorganosiloxane contenant au moins deux groupes alcényle par molécule, ayant une viscosité à 25 °C de 0,05 à 50 Pa.s,
(B) un composé organosilicié comportant au moins deux fonctions SiH par molécule,
(C) un catalyseur activable avec de la lumière de 200 à 500 nm,
(D) un composé ferrocène et
(E) un alcoxysilane comportant au moins un groupe époxy.
